# EUROPEAN PATENT APPLICATION

(11) **EP 3 121 103 A1**
(43) Date of publication of application: **25.01.2017**
(21) Application number: 15765526.7
(22) Date of filing: 09.03.2015
(51) Int. Cl.: B62K 25/08, F16F 9/32

(54) **FRONT FORK**

(30) Priority: 17.03.2014 JP 2014053506
(71) Applicant: KYB Corporation, Tokyo 105-6111 (JP)
(72) Inventor: KURITA, Norihiko, Tokyo 105-6111 (JP)
(74) Representative: Grünecker Patent- und Rechtsanwälte PartG mbB
(86) International application number: PCT/JP2015/056807
(87) International publication number: WO 2015/141508

(57) **Abstract**

A front fork includes a pair of telescopic tube members and an upper bracket on an upper side and an under bracket on a lower side. The upper bracket and the under bracket couple vehicle body side tubes of the pair of tube members and couple the vehicle body side tubes to a vehicle body side. The upper bracket includes a pair of cap portions into which upper side opening portions of the vehicle body side tubes are inwardly inserted. The cap portions cover upper side openings of the tube members.

## Description

### TECHNICAL FIELD

The present invention relates to a front fork.

### BACKGROUND ART

A front fork is interposed between a vehicle body and a front wheel in a saddle-ride type vehicle such as a two-wheeled vehicle to steer the front wheel.

There has been provided a front fork that includes a pair of telescopic tube members having vehicle body side tubes and vehicle wheel side tubes and standing on both sides of the front wheel, an upper bracket on an upper side and an under bracket on a lower side, which couple the vehicle body sides tube of the pair of tube members and couple the vehicle body side tube to a vehicle body frame, which is a frame of a vehicle body, and an axle bracket, which couples the vehicle wheel side tubes of the pair of tube members to a wheel axis of the front wheel.

The above-described front fork includes springs and dampers inside the tube members to reduce an impact caused by unevenness on a road surface, thus providing a comfortable ride of a vehicle (for example, JP2011-220494A, JP2008-265534A, and JP8-142968A).

Cap members are screwed with inner peripherals of upper side opening potions of the vehicle body side tubes in such front fork. The cap members cover the upper openings of the tube members.

The upper bracket includes a pair of clamps. The clamps are split and clamped to be secured to outer peripheries of the upper side opening portions of the vehicle body side tubes. This prevents looseness of the cap members. The under bracket includes a pair of clamps as well. The clamps are split and clamped to be secured to outer peripheries of centers of the vehicle body side tubes (for example, JP8-270707A).

### SUMMARY OF INVENTION

At assembly, the above-described front fork has a structure where the tube members are inserted from a lower side of the under bracket to the clamps of the under bracket and then are inserted from a lower side of an upper bracket to clamps of the upper bracket.

An upper joining portion of the vehicle body side tube to which the clamps of the upper bracket are mounted is thinner than a lower joining portion to which the clamps of the under bracket are mounted. An outside diameter of the cap member is formed smaller than an outside diameter of the upper joining portion. An external thread process is performed on an outer periphery of the cap member.

In view of this, directly mounting members for additional functions, which provide the front fork with additional functions, to the cap members is under strict dimensional restrictions and therefore is difficult.

For example, a front fork disclosed in JP2013-19505A partitions an air chamber for adjustment outside tube members. The air chamber for adjustment is communicated with air chambers, which are formed inside the tube members, to ensure adjustment of an amount of air in the air chambers inside the tube members.

The above-described front fork forms communication holes that communicate an inside with an outside of the tube members at the tube members. An air sealing jig is mounted outside the tube members to communicate the air chambers inside the tube members with the air chamber for adjustment via the communication holes. That is, this avoids the air sealing jig, which is the member for additional functions, to be directly mounted to the cap members under strict dimensional restrictions.

A front fork disclosed in JP2014-208510A includes control passages, which communicate action chambers of dampers, valve elements, which open and close the control passages, proportional solenoids, which control valve opening pressures of the valve elements, and pressure sensors, which detect pressures of the control passages, outside the tube members. Based on values detected by the pressure sensors, an amount of current to be supplied to the proportional solenoids is changed to adjust the valve opening pressures of the valve elements, thus ensuring adjusting a damping force.

The above-described front fork forms the control passages in housings disposed outside the tube members. The valve elements, the proportional solenoids, and the pressure sensors are mounted to these housings. The housings and caps are coupled via hoses. That is, this front fork avoids directly mounting the valve elements, the proportional solenoids, and the pressure sensors, which are the members for additional functions, to the cap members under strict dimensional restrictions.

An object of the present invention is to provide a front fork where dimensional restrictions when members for additional functions are mounted to members that cover upper side openings of tube members are loosened and eases a direct mounting of the members for additional functions to the members covering the upper side openings of the tube members.

According to an aspect of the present invention, a front fork including a pair of telescopic tube members that include vehicle body side tubes and vehicle wheel side tubes; and an upper bracket on an upper side and an under bracket on a lower side, the upper bracket and the under bracket coupling the vehicle body side tubes of the pair of tube members and coupling the vehicle body side tubes to a vehicle body side, is provided. The upper bracket includes a pair of cap portions into which upper side opening portions of the vehicle body side tubes are inwardly inserted, and the cap portions cover upper side openings of the tube members.

### BRIEF DESCRIPTION OF DRAWINGS

FIG. 1 is a schematic diagram illustrating a front fork according to an embodiment of the present invention.
FIG. 2 is a partial cross-sectional view illustrating a main portion of the front fork according to the embodiment of the present invention.
FIG. 3 is a bottom view illustrating one cap member and a center member.
FIG. 4 is a perspective view illustrating a part at which the one cap member couples the center member.

### DESCRIPTION OF EMBODIMENTS

The following describes a front fork F according to an embodiment of the present invention with reference to the accompanying drawings.

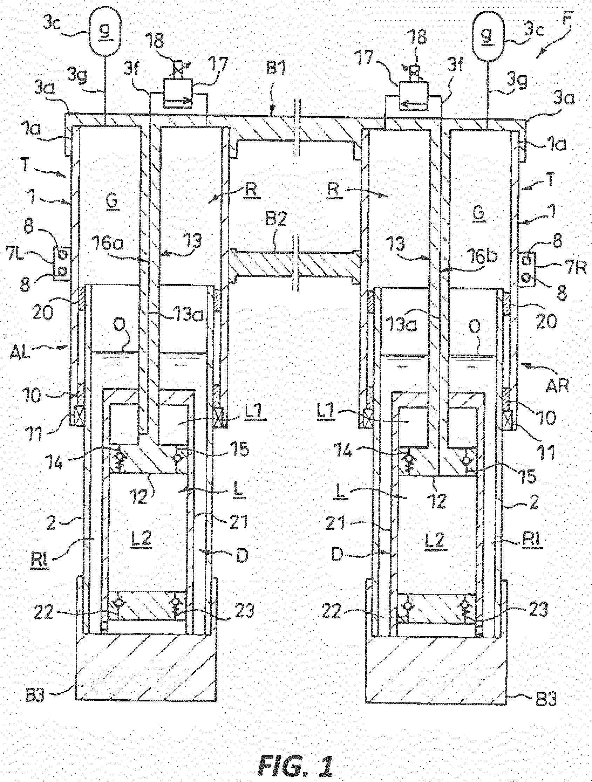

As illustrated in FIG. 1, the front fork F includes a pair of telescopic tube members T and T, which include vehicle body side tubes 1 and vehicle wheel side tubes 2, and an upper bracket B1 on an upper side and an under bracket B2 on a lower side, which couple the vehicle body side tubes 1 of the pair of tube members T and T and couple the vehicle body side tubes 1 to a vehicle body side.

The upper bracket B1 includes a pair of cap portions 3a and 3a into which upper side opening portions 1a of the vehicle body side tubes 1 are inwardly inserted. The cap portions 3a and 3a cover the upper side openings of the tube members T and T.

The following describes the details.

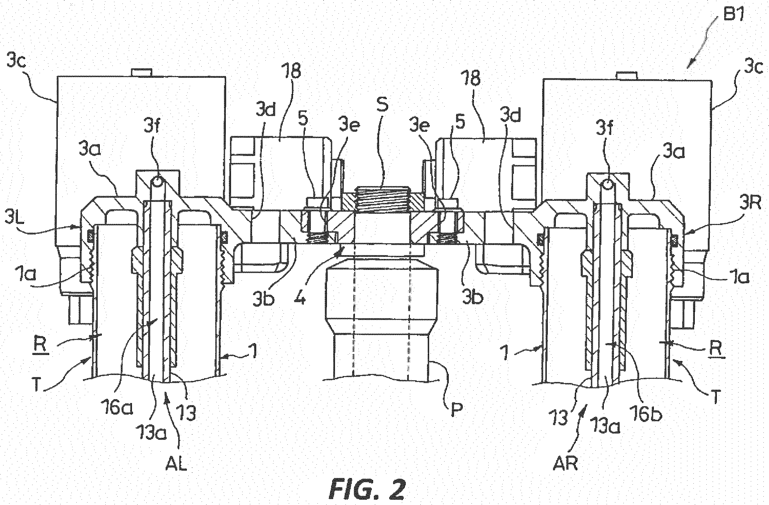

The front fork F is interposed between a vehicle body and a front wheel in a saddle-ride type vehicle such as a two-wheeled vehicle and a three-wheeled vehicle. As illustrated in FIG. 1 and FIG. 2, the front fork F includes a steering shaft S, which is supported to a head tube P of a vehicle body frame, a frame of a vehicle body, the upper bracket B1 secured to an upper end portion of the steering shaft S, the under bracket B2 secured to a lower end portion of the steering shaft S, a pair of axle brackets B3 and B3 coupled to a wheel axis of a front wheel, and a pair of shock absorbers AL and AR, which are interposed between the upper and lower brackets B1, B2 and the axle brackets B3, B3 and stand on both sides of the front wheel. An operation of a handlebar (not illustrated), which is secured to an upper side of the upper bracket B1, rotates the front fork F around an axis of the head tube P, thus changing a direction of the front wheel.

In this embodiment, basic configurations of the shock absorbers AL and AR are identical. The shock absorbers AL and AR both include the telescopic tube member T, which becomes an outer shell, and a damper D, which is disposed inside the tube member T.

A reservoir R between the tube member T and the damper D accumulates liquid and forms a liquid accumulating chamber RI. Above a liquid surface O of the liquid accumulating chamber RI, compressed air is sealed, forming an air chamber G.

The front fork F of this embodiment ensures elastically supporting the vehicle body by a reactive force from the compressed air. That is, the front fork F is an air suspension front fork that eliminates a suspension spring (a main spring), which is formed of a coil spring.

The configuration of the front fork F is appropriately changeable. For example, the suspension spring formed of the coil spring may elastically support the vehicle body. Structures of the shock absorbers AL and AR are also appropriately changeable. For example, in this embodiment, the paired shock absorbers AL and AR both include both the damper D and a spring element, which elastically supports the vehicle body. In contrast to this, like a configuration that includes the one shock absorber AL with the damper D and without the spring element and the other shock absorber AR with the spring element and without the damper D or a similar configuration, basic configurations of the shock absorbers AL and AR may be completely different.

The tube member T is the telescopic type and includes the vehicle body side tube 1 and the vehicle wheel side tube 2, which exits and enters the vehicle body side tube 1 while supported by a pair of upper and lower bearings 20 and 10. The vehicle body side tube 1 is coupled to the vehicle body side via the upper bracket B1 and the under bracket B2, and the vehicle wheel side tube 2 is coupled to the vehicle wheel side via the axle bracket B3. Through an input of an impact caused by unevenness on a road surface, the vehicle wheel side tubes 2 exit and enter the vehicle body side tubes 1, extracting and contracting the shock absorbers AL and AR.

The upper bracket B1, which is mounted to an outer periphery of the upper side opening portion 1a of the vehicle body side tube 1, covers the upper side opening of the tube member T. The axle bracket B3, which is mounted to an outer periphery of the lower side opening portion of the vehicle wheel side tube 2, covers the lower side opening of the tube member T.

An annular sealing member 11 covers a lower side opening, which is a tubular clearance formed at an overlapping portion where the vehicle body side tube 1 overlaps the vehicle wheel side tube 2. The sealing member 11 is held to an inner peripheral of the lower side opening portion of the vehicle body side tube 1 and slidably in contact with the outer peripheral surface of the vehicle wheel side tube 2. This avoids the liquid and gas housed in the tube member T to leak outside the tube member T.

This embodiment configures the tube member T as an inverted type such that the vehicle wheel side tube 2 exits and enters the vehicle body side tube 1. In contrast to this, the tube member T may be configured to be an erecting type such that the vehicle body side tube 1 exits and enters the vehicle wheel side tube 2.

The damper D includes a tubular cylinder 21, an action chamber L formed inside the cylinder 21 and filled with liquid, a piston 12, which slidably moves inside the cylinder 21 axially to partition the action chamber L into an expansion-side chamber L1 and a contraction-side chamber L2, a rod 13 coupled to the piston 12 and one end of which extends outside the cylinder 21, an expansion-side damping passage 14, which provides a resistance to a flow of the liquid heading from the expansion-side chamber L1 to the contraction-side chamber L2, a contraction-side suction passage 15, which allows a flow of the liquid heading from the contraction-side chamber L2 to the expansion-side chamber L1, an expansion-side suction passage 22, which allows a flow of the liquid heading from the reservoir R to the contraction-side chamber L2, and a contraction-side damping passage 23, which provides a resistance to a flow of the liquid heading from the contraction-side chamber L2 to the reservoir R.

In the damper D, the cylinder 21 is coupled to the axle bracket B3 and stands at a shaft center portion of the vehicle wheel side tube 2. One end of the rod 13, which projects from the cylinder 21, is coupled to the upper bracket B 1.

In view of this, during the expansion operation of the shock absorbers AL and AR, an operation that the vehicle wheel side tubes 2 exit from the vehicle body side tubes 1, the cylinders 21 exit from the rods 13 and the liquid in the contracted expansion-side chambers L1 pass through the expansion-side damping passages 14 and move to the enlarged contraction-side chambers L2. Further, the liquid by the volume of exiting the rods passes through the expansion-side suction passages 22 to move from the reservoirs R to the contraction-side chambers L2. Accordingly, the dampers D mainly generate an expansion-side damping force depending on a speed caused by the resistances of the expansion-side damping passages 14 to restrain the expansion operation of the shock absorbers AL and AR. The reservoirs R compensate a change in an internal volume of the cylinders by the volume of exiting the rods.

On the contrary, during an compression operation of the shock absorbers AL and AR, an operation that the vehicle wheel side tubes 2 enter the vehicle body side tubes 1, the rods 13 enter the cylinders 21 and the liquid in the contracted contraction-side chambers L2 passes through the pressure-side suction passages 15 and move to the enlarged expansion-side chambers L1. Further, the liquid by the volume of the entrance of the rods passes through the pressure-side damping passages 23 to move from the contraction-side chambers L2 to the reservoirs R. Accordingly, the dampers D mainly generate a pressure-side damping force depending on a speed caused by the resistances of the pressure-side damping passages 23 to restrain the compression operation of the shock absorbers AL and AR. The reservoirs R compensate a change in an internal volume of the cylinders by the volume of the entrance of the rods.

In the dampers D of the shock absorbers AL and AR of this embodiment, the cylinders 21 are coupled to the vehicle wheel side and the rods 13 are coupled to the vehicle body side, thus configured to be the erecting type.

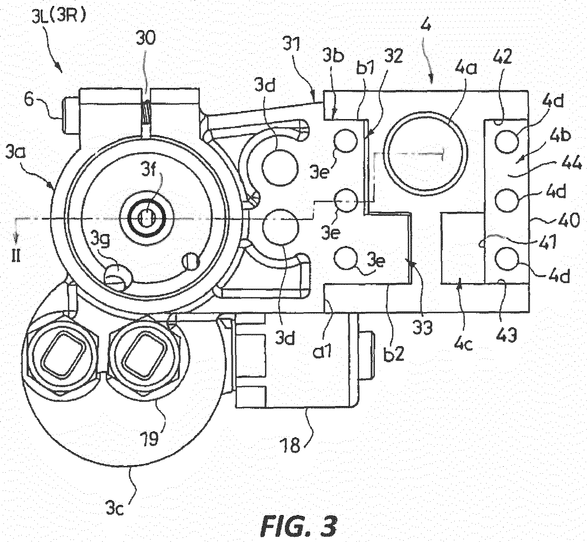

Accordingly, like the shock absorber AL, which is illustrated to the left in FIG. 1, in the case where the expansion-side damping force is adjusted providing a bypass passage 16a, which bypasses the expansion-side damping passage 14 and causes the liquid in the expansion-side chamber L1 to escape to the reservoir R, a valve element 17, which opens and closes the bypass passage 16a, a proportional solenoid 18, which controls a valve opening pressure of the valve element 17, and a pressure sensor 19 (see FIG. 3), which detects a pressure of the bypass passage 16a, forming a part of the bypass passage 16a at the rod 13 allows the proportional solenoid 18 and the pressure sensor 19 to be easily disposed on the vehicle body side, which is on the spring.

Similarly, like the shock absorber AR, which is illustrated to the right in FIG. 1, in the case where the contraction-side damping force is adjusted providing a bypass passage 16b, which bypasses the contraction-side damping passage 23 and causes the liquid in the contraction-side chamber L2 to escape to the reservoir R, the valve element 17, which opens and closes the bypass passage 16b, the proportional solenoid 18, which controls the valve opening pressure of the valve element 17, and the pressure sensor 19 (see FIG. 3), which detects a pressure of the bypass passage 16b, forming a part of the bypass passage 16b at the rod 13 allows the proportional solenoid 18 and the pressure sensor 19 to be easily disposed on the vehicle body side, which is on the springs.

Accordingly, also in the case where the one shock absorber AL is configured to adjust the expansion-side damping force and the other shock absorber AR is configured to adjust the contraction-side damping force, the shock absorbers AL and AR can share many components.

In the case where the shock absorber AR configured to adjust the contraction-side damping force is used, even with the damper D of a stand upside-down type, the proportional solenoid 18 and the pressure sensor 19 are easily disposed on the vehicle body side. Accordingly, in this case, even if the shock absorber AL is configured to adjust the expansion-side damping force, only the damper D for the shock absorber AR may be the stand upside-down type.

A configuration to adjust the dampers D for the shock absorbers AL and AR and the damping force are not limited to the above-described configuration, but can be appropriately changed. For example, one or both the dampers D for the shock absorbers AL and AR may include (an) expandable/compressible cylinder-inside air chamber(s) that compensates the change in internal volume of the cylinder(s) inside the cylinder(s) 21. The damping force generated by the damper D may be manually adjusted, or a damping force adjustment function may be dispensed.

The upper bracket B1 couples the upper side opening portions 1a of the vehicle body side tubes 1, which are provided with the respective shock absorbers AL and AR, and couples the vehicle body side tubes 1 to the vehicle body side.

In this embodiment, the upper bracket B1 is trisected and, as illustrated in FIG. 2, includes a pair of cap members 3L and 3R and one center member 4. Viewing the front fork F from the front, a pair of the cap members 3L and 3R symmetrically have a common configuration laterally. The center member 4 has a laterally symmetrical shape. The center member 4 is interposed between the cap members 3L and 3R, which are arranged laterally, and is joined to the respective cap members 3L and 3R with bolts 5.

In this embodiment, the center member 4 and the cap members 3L and 3R are each joined with the three bolts 5. It should be noted that, the number of the bolts 5 for joining and locations of the bolts 5 can be appropriately changed.

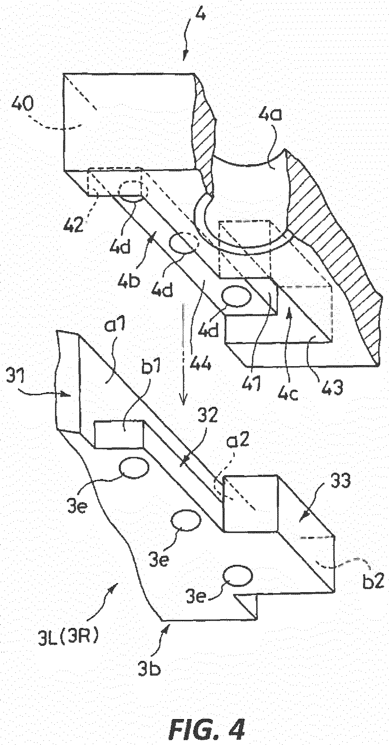

As described above, the configurations of the cap members 3L and 3R are common and are laterally symmetrical. Although FIG. 3 and FIG. 4 illustrate only the cap member 3L, the following refers to FIG. 3 and FIG. 4 regarding a description on the cap member 3R as well. It should be noted that, the cross-sectional surface of the upper bracket B1 illustrated in FIG. 2 is laterally symmetrically taken along the line II in FIG. 3.

As illustrated in FIG. 2 and FIG. 3, the cap members 3L and 3R both include the cap-shaped cap portion 3a into which the upper side opening portion 1 a of the vehicle body side tube 1 is inwardly inserted, a fitted portion 3b, which is coupled to the center member 4, and a tank 3c, which internally includes a sub-air chamber g (see FIG. 1).

Bolt insertion holes 3d, which fix a handlebar, are formed at boundaries of the cap portions 3a and the fitted portions 3b in the cap members 3L and 3R. The fitted portions 3b include bolt insertion holes 3e to fix the center member 4.

Furthermore, the cap members 3L and 3R include control passages 3f opening to the reservoirs R. The control passage 3f constitutes the bypass passage 16a or the bypass passage 16b together with shaft center holes 13a, which are formed at the rods 13.

To the cap members 3L and 3R, the valve elements 17 (see FIG. 1), which open and close the control passages 3f, the proportional solenoids 18, which control the valve opening pressures of the valve elements 17, and the pressure sensors 19 (see FIG. 3), which detect a pressure on the damper D side upstream with respect to the valve elements 17 in the control passages 3f, are mounted.

At the cap members 3L and 3R, communication passages 3g (see FIG. 1 and FIG. 3), which are open to the reservoirs R to communicate the air chamber G with the sub-air chamber g, are formed. The tanks 3c, the proportional solenoids 18, and the pressure sensors 19 are disposed so as not to interfere with the handlebar mounted to the upper bracket B 1.

The front fork F according to the embodiment employs an air suspension system. A compression ratio of a chamber that seals compressed air is decided according to desired properties of the spring. As described above, this embodiment communicates the air chamber G with the sub-air chamber g via the communication passage 3g, thereby ensuring increasing a volume of the chamber that seals the compressed air. Thus, expanding the chamber that houses the compressed air up to the sub-air chamber g ensures heightening a liquid surface height inside the tube member T. This allows the cylinder 21 to internally suction liquid with less mixture of air bubble, ensuring improving performance of the damper D.

It should be noted that, in this embodiment, as members for additional functions to provide the front fork F with the additional functions, the tanks 3c, the valve elements 17, the proportional solenoids 18, and the pressure sensors 19 are mounted to the cap members 3L and 3R, which cover the upper side openings of the tube members T. However, the members for additional functions mounted to the cap members 3L and 3R can be appropriately changed according to a type of the additional function added to the front fork F.

An internal thread process is performed on inner peripherals of the cap portions 3a of the cap members 3L and 3R, and the cap portions 3a are screwed with outer peripheries of the upper side opening portions 1a of the vehicle body side tubes 1. As illustrated in FIG. 3, the cap portion 3a has a cutout 30. Screwing a bolt 6 ensures split clamping by narrowing down the cutout 30 to secure, thus stopping looseness of screw joining of the cap portions 3a with the vehicle body side tubes 1.

Thus, in this embodiment, the upper side opening portions 1a of the vehicle body side tubes 1 are inserted into the members covering the upper side openings of the tube members T, that is, the insides of the cap portions 3a of the cap members 3L and 3R, which constitute the upper bracket B1.

This ensures loosening dimensional restrictions on mounting the members for additional functions to the cap members 3L and 3R, making it possible to directly mounting the members for additional functions such as the tanks 3c, the valve elements 17, the proportional solenoids 18, and the pressure sensors 19 easily to the cap members 3L and 3R.

With the configuration, the vehicle wheel side tubes 2 are insertable up to thread engagement portions of the vehicle body side tubes 1 with the cap members 3L and 3R. This ensures lengthening a stroke or lengthening a fitting length of the vehicle body side tubes 1 and the vehicle wheel side tubes 2, thereby ensuring providing a distance between the bearings 10 and 20. This stably supports the vehicle wheel side tubes 2, ensuring restraining unsteadiness.

It should be noted that, as long as the upper side opening portion 1a of the vehicle body side tube 1 is inserted into the inside of the cap portion 3a, a method for coupling the cap portion 3a and the vehicle body side tube 1 can be appropriately changed. For example, the internal thread process for the cap portion 3a may be omitted and the cap portion 3a may be secured only by being split and clamped. Screwing nuts with the outer peripheries of the upper side opening portions 1a of the vehicle body side tubes 1 in series to the cap members 3L and 3R may stop the looseness.

The following describes coupling parts of the cap members 3L and 3R with the center member 4 with reference to FIG. 3 and FIG. 4. It should be noted that, the following gives the description with the upper side in FIG. 3 as the front.

As illustrated in FIG. 3 and FIG. 4, the fitted portions 3b, which are coupled to the center member 4 at the cap members 3L and 3R, include base portions 31, which have a thick wall wider in a front-rear direction, center portions 32, which extend from the lower portions of the base portions 31 to the center member 4 side and have a thinner wall whose front-rear width is narrower than those of the base portions 31, and distal end portions 33, which extend from the rear portions of the center portions 32 to the center member 4 side and whose upper portions project to an upper side with respect to the center portions 32.

A surface of the base portion 31 and a surface of the distal end portion 33 opposed in a right-left direction are configured as right-left direction securing surfaces a1 and a2. A front surface of the center portion 32 and a rear surface from the center portion 32 to the distal end portion 33, which are opposed back to back in the front-rear direction, are configured as front-rear direction securing surfaces b1 and b2.

On the center portion 32, the three bolt insertion holes 3e are aligned back and forth. The internal thread process is performed on the inner peripherals of the bolt insertion holes 3e, 3e, and 3e to ensure screwing the bolts 5, which couple the cap members 3L and 3R to the center member 4.

At the center of the center member 4 in the right-left direction, a coupling hole 4a into which an upper end portion of the steering shaft S is inserted, is formed. On the lower portion of the center member 4, a shallow groove 4b into which the center portions 32 on the cap members 3L and 3R is inserted and a deep groove 4c, which is continuous with the shallow groove 4b and into which the distal end portions 33 of the cap members 3L and 3R are inserted, are formed.

Stacking and fitting the center member 4 over/to the fitted portions 3b of the cap members 3L and 3R from the upper side brings an end surface 40 of the center member 4 on the cap member 3L and 3R side in contact with the right-left direction securing surfaces a1 of the base portions 31. At the same time, a groove wall 41, which is continuous with the shallow groove 4b at the deep groove 4c, contacts the right-left direction securing surfaces a2 of the distal end portions 33. This restricts the unsteadiness of the center member 4 with the cap members 3L and 3R in the right-left direction.

Fitting the center member 4 to the cap members 3L and 3R brings a groove wall 42, which is on the front side of the shallow groove 4b of the center member 4, in contact with the front-rear direction securing surfaces b1, which are on the front side of the center portions 32. A groove wall 43, which is on the rear side from the shallow groove 4b to the deep groove 4c, contacts the front-rear direction securing surfaces b2 from the center portions 32 to the distal end portions 33. This restricts the unsteadiness of the center member 4 with the cap members 3L and 3R in the front-rear direction.

On the center member 4, three bolt insertion holes 4d are openly bored in the front-rear direction from the upper side to the shallow groove 4b. When the center member 4 is fitted to the cap members 3L and 3R, the bolt insertion holes 4d of the center member 4 are opposed to the bolt insertion holes 3e of the cap members 3L and 3R. Accordingly, with a bottom 44 of the shallow groove 4b abutting against the top surfaces of the center portions 32, the bolts 5 are inserted through the bolt insertion holes 4d for screwing with the bolt insertion holes 3e. This restricts the unsteadiness of the center member 4 with the cap members 3L and 3R in the up-down direction.

That is, the center member 4 and the cap members 3L and 3R are fitted to one another and are joined together with the bolts 5, thus preventing the unsteadiness in the front-rear, right-left, and up-down directions. It should be noted that, the structure of fitting the center member 4 to the cap members 3L and 3R and the method for coupling the center member 4 to the cap members 3L and 3R are not limited to the above-described structure and method. It is only necessary that the center member 4 is not separated from the cap members 3L and 3R during vehicle running.

The under bracket B2, which couples the center portions of the vehicle body side tubes 1 in the respective shock absorbers AL and AR and couples the vehicle body side tubes 1 to the vehicle body side, is not configured to be a divided type like the upper bracket B1 in this embodiment. In the under bracket B2, a centering portion (not illustrated), which is secured to a lower end portion of the steering shaft S, is integrated with a pair of clamps 7L and 7R (see FIG. 1), which are split and clamped to be secured to the outer peripheries of the center portions of the vehicle body side tubes 1. It should be noted that, the under bracket configured by integrating the centering portion and a pair of the clamps is well-known; therefore, a detailed illustration is omitted.

The following describes a method for assembling the front fork F according to the embodiment.

Before liquid is poured to the tube members T to which the axle brackets B3 have been mounted, the tube members T are passed through the under bracket B2 to which the steering shaft S has been secured. After the liquid is poured to the tube members T, the cap members 3L and 3R are temporarily fastened to constitute a front fork assembly.

In the front fork assembly, only the center member 4, which constitutes the front fork F, and the bolts 5 for coupling the center member 4 are disjoined. One of the bolts 6 for split clamping of the cap members 3L and 3R and bolts 8 for split clamping of the clamps 7L and 7R are loosened, and the others are tightened.

Subsequently, the steering shaft S of the front fork assembly is inserted into the head tube P. The center member 4 is secured to an upper end portion of the steering shaft S projecting from the head tube P. The center member 4 is fitted to the cap members 3L and 3R and is secured with the bolts 5.

Subsequently, a wheel axis is secured to the axle brackets B3, which are mounted to the lower end portions of the tube members T. After an absence of a twist in the front fork F is checked, the loosened bolts among the bolts 6 for split clamping of the cap members 3L and 3R and the bolts 8 for split clamping of the under brackets 7L and 7R are tightly fastened.

The following describes operational advantages of the front fork F according to the embodiment.

In this embodiment, the cap members 3L and 3R include the cap portions 3a, which are coupled to the tube members T, and the fitted portions 3b, which are coupled to the center member 4. The center member 4 is stacked on the upper sides of the fitted portions 3b.

To assemble the front fork F, this configuration mounts the cap members 3L and 3R to the tube members T, and then mounts the center member 4 to the cap members 3L and 3R, thus ensuring easy coupling with the steering shaft S. It should be noted that, the configuration of the coupling parts of the center member 4 with the cap members 3L and 3R is not limited to the above-described configuration but can be appropriately changed.

In this embodiment, the upper bracket B1 is divided into three, the center member 4 coupled to the steering shaft S, the one cap member 3L, which includes the one cap portion 3a among a pair of the cap portions 3a and 3a, and the other cap member 3L, which includes the other cap portion 3a.

With the configuration, in the case where, due to a reason such as plants being different, a process that assembles the front fork assembly is separated from a process of mounting the front fork assembly to the vehicle body and therefore the front fork assembly needs to be, for example, stored, moved, or transported, the cap members 3L and 3R can cover the upper side openings of the tube members T in the front fork assembly. This ensures preventing a mixture of a foreign matter inside the tube members T, thereby ensuring improvement in convenience during, for example, storing, moving, and transporting the front fork assembly.

The upper bracket B1 divided into two or more can achieve the effect. It should be noted that, the number of divisions and positions at which the upper bracket B1 is divided can be appropriately changed. As described above, in the case where the upper bracket B1 is divided into the center member 4 and a pair of the cap members 3L and 3R, the upper bracket B1 is easily coupable to the steering shaft S.

When there is no need to worry about the mixture of the foreign matter inside the tube members T like the case where the assembly of the front fork F and the attachment to the vehicle body are continuously performed or a similar case, the upper bracket B1 may not be divided.

In this embodiment, since the under bracket B2 is integrated, the pair of tube members T and T are passed through the under bracket B2 and then are mounted to the vehicle body. In contrast to this, with the divided under bracket B2, the paired tube members T and T are individually mountable to the vehicle body.

It should be noted that, a large load may be applied to the under bracket B2 during vehicle running. In contrast to this, this embodiment, which employs the integrated under bracket B2, can use the existing under bracket. Accordingly, there is no need to check a strength of the under bracket B2 again. The strength needs to be checked again for the divided under bracket B2.

In this embodiment, the front fork F includes a pair of the telescopic tube members T and T, which include the vehicle body side tubes 1 and the vehicle wheel side tubes 2, and the upper bracket B1 on the upper side and the under bracket B2 on the lower side, which couple the vehicle body side tubes 1 of the pair of tube members T and T and couple the vehicle body side tubes 1 to the vehicle body side. The upper bracket B1 includes a pair of the cap portions 3a and 3a into which the upper side opening portions 1a of the vehicle body side tubes 1 are inwardly inserted. The cap portions 3a and 3a cover the upper side openings of the tube members T and T.

With this configuration, since the upper bracket B1, which is the member of covering the upper side openings of the tube members T, are mounted to the outsides of the upper side openings 1a of the vehicle body side tubes 1. This loosens the dimensional restrictions on mounting the members for additional functions to the upper bracket B1, making it possible to directly mounting the members for additional functions easily to the upper bracket B 1.

The embodiments of the present invention described above are merely illustration of some application examples of the present invention and not of the nature to limit the technical scope of the present invention to the specific constructions of the above embodiments.

The present application claims a priority of Japanese Patent Application No. 2014-53506 filed with the Japan Patent Office on March 17, 2014, all the contents of which are hereby incorporated by reference.

## Claims

1. A front fork comprising:
a pair of telescopic tube members that include vehicle body side tubes and vehicle wheel side tubes; and
an upper bracket on an upper side and an under bracket on a lower side, the upper bracket and the under bracket coupling the vehicle body side tubes of the pair of tube members and coupling the vehicle body side tubes to a vehicle body side, wherein
the upper bracket includes a pair of cap portions into which upper side opening potions of the vehicle body side tubes are inwardly inserted, and
the cap portions cover upper side openings of the tube members.

2. The front fork according to claim 1, wherein
the upper bracket is divided into two or more.

3. The front fork according to claim 2, wherein
the upper bracket is divided into three: a center member coupled to a steering shaft, one cap member including one of the cap portions, and another cap member including another of the cap portions.

4. The front fork according to claim 3, wherein
the cap members further include fitted portions coupled to the center member, the center member being stacked on upper sides of the fitted portions.

5. The front fork according to claim 1, wherein
the under bracket is divided into two or more.
